# EUROPEAN PATENT SPECIFICATION

(11) **EP 2 618 287 B1**
(45) Date of publication and mention of the grant of the patent: **18.01.2017**
(21) Application number: 13151990.2
(22) Date of filing: 21.01.2013
(51) Int. Cl.: G06K 7/14, G06K 19/06

(54) **Data input/output method using a dot code**
Dateneingabe-/-ausgabeverfahren unter Verwendung eines Punktcodes
Procédé d'entrée/sortie de données utilisant un code à points

(30) Priority: 21.01.2012 CN 201210020035; 21.01.2012 CN 201210019581
(43) Date of publication of application: 24.07.2013
(73) Proprietor: Huang, Tzu-fong, Hsinchu (TW)
(72) Inventor: Huang, Tzu-fong, Hsinchu (TW)
(74) Representative: Becker Kurig Straus

(56) References cited:
- EP-A1- 1 876 552
- EP-A2- 0 887 765

## Description

### BACKGROUND

### Technical Field

The invention relates to a dot code capable of being read through pattern/image recognition, and the dot code is formed on a surface of an object and corresponds to indicator data.

### Related Art

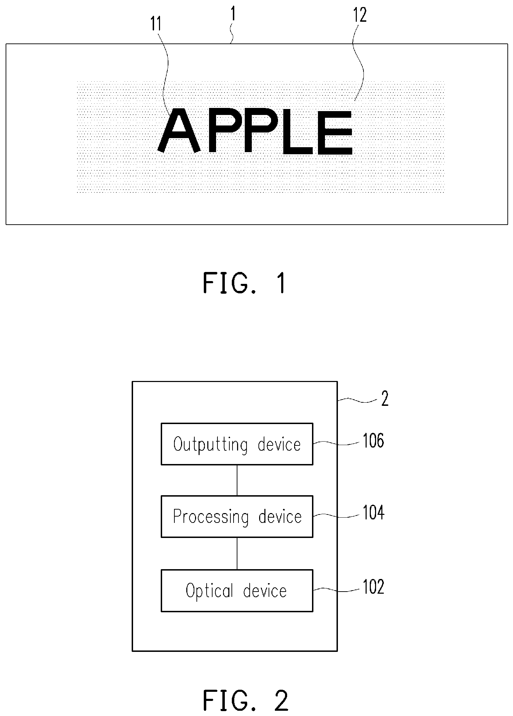

FIG. 1 is a schematic diagram of a dot code 12 formed on an object surface 1. As shown in FIG. 1, the dot code 12 is composed of a plurality of bit dots, and since the bit dots are very tiny, they are easily to be visually ignored or interpreted as a background by human eyes. The dot code 12 and an information material 11 (for example, a text pattern "APPLE" of FIG. 1) are commonly formed on the object surface 1 such as a paper, etc. through a method of, for example, printing. The dot code 12 corresponds to indicator data and does not influence the human eyes to receive the information material 11.

FIG. 2 is a schematic diagram of an electronic system 2. The electronic system 2 has an optical device 102, a processing device 104 and an output device 106, and can perform an image recognition procedure to read the dot code 12. The optical device 102, the processing device 104 and the output device 106 are connected to each other through a wired or wireless manner. The optical device 102 reads the object surface to obtain an enlarged image, and then the processing device 104 obtains the dot code 12 from the enlarged image for converting into digital data, and obtains extra information corresponding to the digital data. Finally, the output device 106 received the extra information, and outputs the extra information in a predetermined form. Therefore, according to the design of the dot code 12, the object surface such as a book page, etc. may carry more extra information.

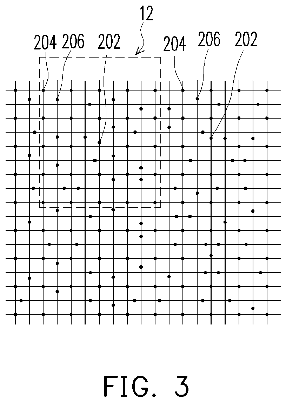

FIG. 3 is a schematic diagram of a conventional pattern design including a plurality of dot codes 12. As shown in FIG. 3, the dot code 12 (a region encircled by dot lines) is composed of a key dot 202, a plurality of grid dots 204 and a plurality of information dots 206 arranged according to predetermined rules. In detail, in one dot code 12, the key dot 202 is taken as a center to configure a plurality of the grid dots 204 at periphery, where each four grid dots 204 are configured as a rectangular block, and a center of each four grid dots 240 serves as a virtual point, and the information dot 206 located in the rectangular block can be selectively shifted by a distance to the top, bottom, left and right of the virtual dot to respectively represent different values, and is then read by the aforementioned electronic system 2. The key dot 202 is formed by shifting a grid dot 204 at the center of the dot code 12 by a distance along a predetermined direction. The key dot 202 can provide a reference direction of the dot code 12 to serve as a direction reference when the optical device 112 reads the object surface to obtain the enlarged image. Moreover, the method of configuring four grid dots 204 into one rectangular block can serve as a correction reference for deformation generated when the dot code 12 is read or printed.

As shown in FIG. 1, the dot code 12 generally coexists with the information material 11 on the object surface 1, so that the higher density of the bit dots is, the worse the visual effect is, and the human eyes are more easy to perceive the existence of the dot code 12, and a chance of confusing the dot code 12 and the information material 11 is increased. On the other hand, when the dot code 12 is formed in a limited region of the object surface, under a premise of providing a same amount of information, the excessive distribution density of the bit dots may lead to a result that a distance between two adjacent bit dots are excessively small, so that when the bit dots are formed on a paper through, for example, printing, it may cause obvious visual interference. In order to mitigate the visual interference, the size of the bit dot is generally further decreased, which may increase a resolution requirement of printer and paper, and cause a problem of dot leakage during the printing process, so that printing difficulty is increased, and the optical device may have a problem of read error and is difficult in recognition. The conventional design method of the dot code of FIG. 3 may obviously lead to an excessively high bit dot density to cause the above problems.

EP 0 887 765 A2 discloses a dot code for recording digital data, such as multi-media information, as an optically readable code pattern, using various modulation methods, and also a code reading apparatus for restoring modulated information recorded as the dot code.

EP 1 876 552 A1 discloses an information input/output method imparting different functions to dots of a dot pattern displayed on a printed matter, thereby, at the time of providing information from the dot pattern, recognizing and providing information and that is capable of checking an error relative to a dot layout state, and further, that is capable of enhancing security.

### SUMMARY

The present invention is provided by appended claims 1 and 8. Beneficial embodiments are provided in the dependent claims. Accordingly, the invention is directed to a data input/output method using a dot code, by which a lower bit dot density is provided and a dot code is constructed by using less bit dots, so as to avoid the problems of the conventional design.

According to the above descriptions, in the invention, less number of dots (lower dot density) can be used to provide large amount of information, so as to provide better visual effect, and human eyes are not easy to perceive existence of the dot codes, so as to avoid confusing the coexisted dot codes and the information material.

In order to make the aforementioned and other features and advantages of the invention comprehensible, several exemplary embodiments accompanied with figures are described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic diagram of a dot code formed on an object surface.
FIG. 2 is a block diagram of an electronic system used to read the dot code.
FIG. 3 is a schematic diagram of a conventional pattern design including a plurality of dot codes.
FIG. 4 is a schematic diagram of a pattern formed by a plurality of dot codes 10 according to an embodiment of the invention.
FIG. 5 is an enlarged schematic diagram of one dot code 10 of FIG. 4.
FIG. 6 is a flowchart illustrating a method of forming the dot code 10 according to an embodiment of the invention.
FIG. 7 is an enlarged schematic diagram of one first block 110 of FIG. 5.
FIG. 8 is an enlarged schematic diagram of a second block 210D of FIG. 5.
FIG. 9 is a schematic diagram of another design of a label part 200 of the dot code 10.
FIG. 10 is a schematic diagram of another design of the dot code 10.
FIG. 11A is an enlarged schematic diagram of one first block 110 of FIG. 10.
FIG. 11B is a schematic diagram of code values obtained when a dot A is respectively set in first bit zones 112a-112y.
FIG. 12A is another design of the first block 110 of the dot code 10.
FIG. 12B is still another design of the first block 110 of the dot code 10.
FIG. 13A is another design of a first or a second block of the dot code 10.
FIG. 13B is still another design of the first or the second block of the dot code 10.
FIG. 14A is a schematic diagram of a dot code according to a variation embodiment of the invention.
FIG. 14B is an enlarged schematic diagram of a virtual block of FIG. 14A.
FIG. 14C is a variation of the virtual block of FIG. 14B.
FIG. 15 is a flowchart illustrating a chip decoding method according to an embodiment of the invention.

### DETAILED DESCRIPTION OF DISCLOSED EMBODIMENTS

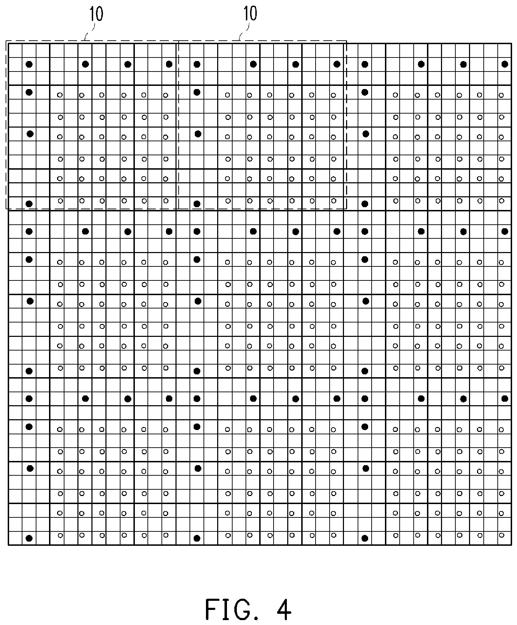

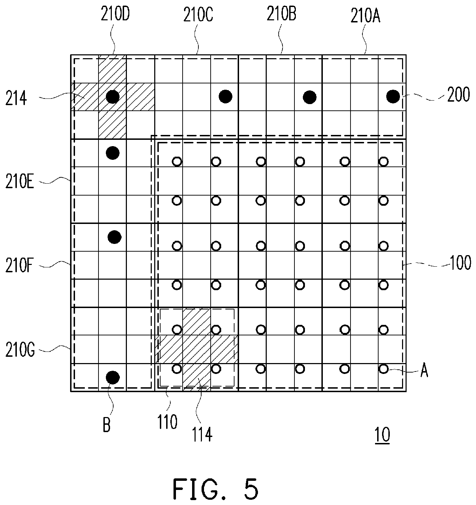

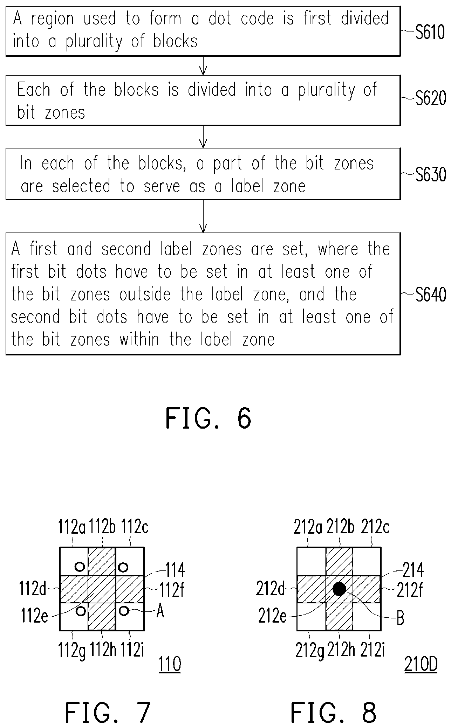

FIG. 4 is a schematic diagram of a pattern formed by a plurality of dot codes 10 according to an embodiment of the invention. In order to clearly describe the design of the invention, FIG. 5 is an enlarged schematic diagram of one dot code 10 of FIG. 4. FIG. 6 is a flowchart illustrating a method of forming the dot code 10 according to an embodiment of the invention, which is used to describe various steps used to from the dot code 10.

Referring to FIG. 5 and FIG. 6, in step S610, a region used to form a dot code 10 is first divided into a plurality of blocks, for example, a block 110 shown in FIG. 5, where the blocks are arranged in a matrix, and the blocks are adjacent to each other and are not overlapped to each other. In step S620, each of the blocks is divided into a plurality of bit zones. Taking FIG. 5 as an example, each of the blocks can be divided into 9 bit zones arranged in an array of 3×3. After the bit zones are divided, a step S630 is executed, by which in each of the blocks, a part of the bit zones are selected to serve as a label zone, and the other bit zones serve as a data zone. As shown in FIG. 5, in each of the blocks, 5 bit zones arranged in a crisscross are selected to serve as a label zone 114.

After the label zone is determined, a step S640 is executed to set bit dots. The bit dots can be divided into first bit dots and second bit dots. The first bit dots have to be set in at least one of the bit zones of the data zone, and the second bit dots have to be set in at least one of the bit zones of the label zone. It should be noticed that the bit dots set in the data zone are used to form data information of the dot code 10, and the bit dots set in the label zone are used to form label information of the dot code 10. Moreover, setting of the first and the second bit dots does not have a sequence. In other words, the first and the second bit dots can be directly printed on a surface of an object after prior typesetting. As shown in FIG. 4, a plurality of the dot codes 10 formed through the aforementioned steps can be simultaneously printed on the surface of the object.

In the dot code formed according to the aforementioned steps, each of the blocks may have one or more than one bit dots, so that the data zone of one block may have two bit dots, or the label zone of one block may have two bit dots, or both of the data zone and the label zone of one block have the bit dot, though the two bit dots have to be respectively set in different bit zones.

To facilitate description, in the following embodiments, a code composition that one block has only one bit dot is taken as an example for descriptions. And FIG. 5 illustrates a detailed composition of the dot code 10. Referring to FIG. 5, the dot code 10 is divided into a data part 100 and a label part 200 according to whether the bit zone of the bit dot in each of the blocks is located in the data zone or the label zone. First, a structure of the data part 100 is described. In the present embodiment, the data part 100 includes 9 first blocks 110. Each of the first blocks 110 has a plurality of first bit zones arranged in an array of (M×N), where M and N are integers greater than or equal to 3. In the present embodiment, M and N are all equal to 3, the first block 110 is divided into a plurality of the first bit zones, and the first bit zones are arranged in an array of 3×3.

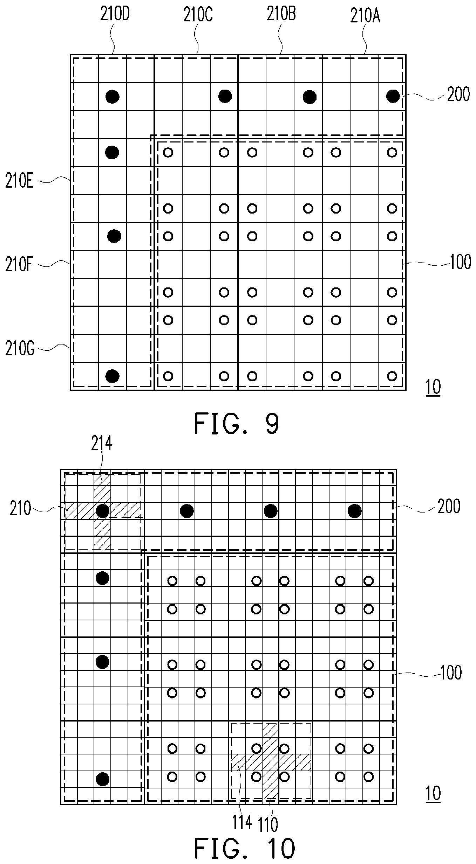

FIG. 7 is an enlarged schematic diagram of one of the first blocks 110 of FIG. 5. Referring to FIG. 7, the first bit zones are given different referential numbers 112a-112i according to different positions, where five first bit zones 112b, 112d, 112e, 112f and 112h arranged in a crisscross form the first label zone 114, and four first bit zones 112a, 112c, 112g and 112i separated by the first label zone 114 to be none adjacent to each other serve as a first data zone. Each of the first blocks 110 only has one first bit dot, and the first bit dot has to be set in one of the four first bit zones 112a, 112c, 112g and 112i of the first data zone. Therefore, as shown in FIG. 7, four dots A represents four positions where the first bit dot can be disposed, and in the present embodiment, the four positions where the first bit dot can be disposed are respectively located at corners of the four first bit zones 112a, 112c, 112g and 112i of the first data zone, though the invention is not limited thereto, and the four positions can also be located at centers of the four first bit zones 112a, 112c, 112g and 112i (shown as the data part 100 of FIG. 9). The first bit dots set in different first bit zones of the first data zone may represent different code values, though in a same first bit zone, the code value is not varied along with different positions of the first bit dot in the first bit zone.

For example, when the dot A is set in the top left first bit zone 112a of the first data zone, it can be used to represent a code value 00; when the dot A is set in the top right first bit zone 112c of the first data zone, it can be used to represent a code value 01; when the dot A is set in the bottom left first bit zone 112g of the first data zone, it can be used to represent a code value 10; and when the dot A is set in the bottom right first bit zone 112i of the first data zone, it can be used to represent a code value 11. The aforementioned relationship between the setting positions of the first bit dot and the code values is only an example, and those skilled in the art can perform coding according to an actual requirement. In this way, as shown in FIG. 5, in the data part 100, different setting positions of the first bit dots in the first blocks 110 represent different code value combinations, and different code value combinations represent different indicator data. Similarly, in one data zone, if different bit zones are all configured with the bit dots, permutation and combination of the code values are more complicated, which may represent more data combinations.

Referring to FIG. 5, a structure of the label part 200 is described below. As shown in FIG. 5, the label part 200 is divided into a plurality of second blocks 210. In the present embodiment, the second blocks 210 may have different referential numbers according to different positions thereof. Therefore, the label part 200 includes seven second blocks 210A-210G, and the second blocks 210A-210G present an L-shape distribution, and the L-shape label part 200 is adjacent to two neighbouring boundaries of the data part 100. Therefore, the first blocks 110 and the second blocks 210A-210G are arranged in an array of 4x4. Each of the second blocks 210A-210G can be further divided into a plurality of second bit zones arranged in an array of (P×Q), where P and Q are integers greater than or equal to 3. In the present embodiment, P and Q are all equal to 3, so that each of the second blocks 210A-210G is divided into a plurality of the second bit zones, and the second bits zones are arranged in an array of 3×3.

FIG. 8 is an enlarged schematic diagram of the second block 210D of FIG. 5. Referring to FIG. 8, if the second bit zones are given different referential numbers 212a-212i according to different positions thereof, five second bit zones 212b, 212d, 212e, 212f and 212h arranged in a crisscross may form a second label zone 214. Each of the second blocks 210A-210G only have one second bit dot, and in the present embodiment, the second bit dots of the second blocks 210A-210G have to be set in the bit zones of the label zone 214. Namely, the second bit dot can only be set in one of the five second bit zones 212b, 212d, 212e, 212f and 212h. As shown in FIG. 8, the second bit dot is, for example, a dot B, and the dot B is set in the second bit zone 212e of the second label zone 214. Further, the second bit zone 212 is a central part of the second label zone 214 arranged in the crisscross.

Referring to FIG. 4, the label part 200 can be used to separate two adjacent dot codes 10, such that when the pattern/image recognition is performed to read the dot codes 10, after an optical device reads the surface of the object to obtain an enlarged image, as long as the label part 200 of the dot code 10 is first recognized, besides that the first bit zone of the first data zone where the first bit dot of each of the blocks of the data part 100 is set can be accurately recognized, an arranging sequence of the blocks in the data part 100 can be further defined.

Moreover, by changing the setting positions of the second bit dots in the label part 200, different label parts 200 can be generated. Referring to FIG. 5, the second bit dot of the second block 210D is disposed at a cross part of the second label zone 214. The second bit dots of the second blocks 210A, 210B and 210C located in a same row deviates from the cross part of the corresponding second label zone 214 along a first direction, where the first direction is, for example, an X-axis direction of a two-dimensional (2D) Cartesian coordinate system. On the other hand, the second bit dots of the second blocks 210E, 210F and 210G located in a same column deviates from the cross part of the corresponding second label zone 214 along a second direction, where the second direction is, for example, a Y-axis direction of the 2D Cartesian coordinate system. Namely, the first direction is substantially perpendicular to the second direction.

FIG. 9 is a schematic diagram of another design of the label part 200 of the dot code 10. Referring to FIG. 9, each of the second bit dots of the second blocks 210A, 210B, 210C located in a same row is set at the cross part of the corresponding second label zone. Each of the second bit dots of the second blocks 210E, 210F, 210G located in a same column deviates from the cross part of the corresponding second label zone. In this way, the label part 200 helps to accurately obtain the code information of the data part 100.

FIG. 10 is a schematic diagram of another design of the dot code 10. The dot code 10 is also composed of a data part 100 and a label part 200. A region occupied by the data part 100 is divided into 9 first blocks 110. A region occupied by the label part 200 is divided into 7 second blocks 210. Different to the aforementioned embodiment, the first block 110 is further divided into a plurality of first bit zones 112, and the first bit zones 112 are arranged in an array of 5×5.

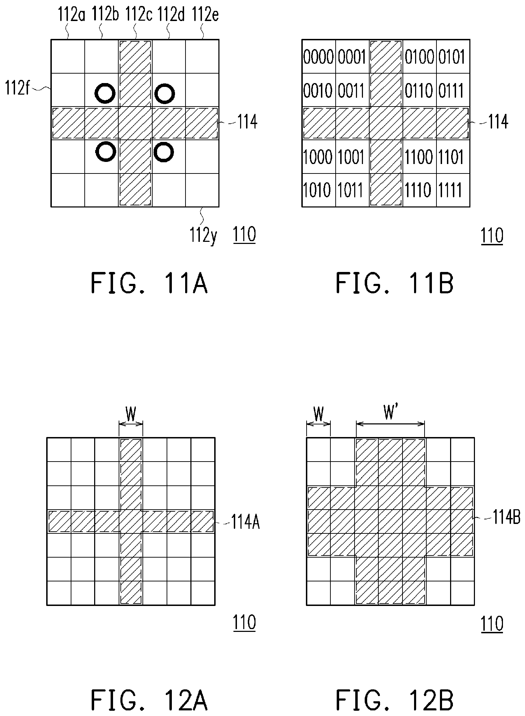

FIG. 11A is an enlarged schematic diagram of one of the first blocks 110 of FIG. 10. Referring to FIG. 11A, each of the first bit zones 112 in the first block 110 is given a different referential number according to positions thereof, which are sequentially first bit zones 112a, 112b, ..., 112y from the top left to the bottom right. The first bit zones 112c, 112h, 112k, 1121, 112m, 112n, 112o, 112r and 112w arranged in a crisscross form a first label zone 114. According to FIG. 11A, it is obvious that the first label zone 114 divides the first block 110 into four data zones that are not adjacent to each other, where the first data zones are 112a, 112b, 112f and 112g, and the second data zones are 112d, 112e, 112i and 112j, and the other two data zones are deduced by analogy.

Similarly to the aforementioned embodiment, the first block 110 has a first bit dot, and the first bit dot has to be set in the zone outside the first label zone 114. For example, the first bit dot of the present embodiment is a dot A, which can be set in one of the four data zones shown in FIG. 11A. When the dot A is set in the first data zone, it can be used to represent a code value 00; when the dot A is set in the second data zone, it can be used to represent a code value 01; when the dot A is set in the third data zone, it can be used to represent a code value 10; and when the dot A is set in the fourth data zone, it can be used to represent a code value 11.

However, each of the data zones is composed of the same number of the first bit zones, so that besides that the dot A is set in one of the four data zones, it can also be set in one of the first bit zones of the data zone. As shown in FIG. 11B, FIG. 11B is a schematic diagram of code values obtained when the dot A is respectively set in the first bit zones 112a-112y. In other words, if the first blocks 110 are all encoded through four bits shown in FIG. 11B, the data part 100 of FIG. 10 has 16⁹ combinations. Therefore, according to the design of the dot code 10 shown in FIG. 10, 16⁹ different values in the corresponding indicator data can be represented.

According to the above descriptions, by dividing the first block 110 into the first bit zones of different numbers, flexibility in design of the data part 100 and the indicator data is increased. On the other hand, the second block 210 in the label part 200 of FIG. 10 has a same size with that of the first block 110, and an arranging method of the second label zone in the second block 210 is the same to that of the first label zone in the first block 110. It should be noticed that the second bit dot in the second block 210 is set in one of the second bit zones in the second label zone.

In the aforementioned embodiment, the blocks and the label zones in the data part 100 and the label part 200 all have the same design. However, the cross-shape label zones of the data part 100 and the label part 200 may have different designs, as that shown in FIG. 12A and FIG. 12B. FIG. 12A is another design of the first block 110 of the dot code 10. Referring to FIG. 12A, the first block 110 is divided into 7×7 bit zones arranged in an array, where a first label zone 114A is composed of one row and one column of the bit zones in the center of the first block 110. Compared with the embodiment of FIG. 11A, since the first block 110 of FIG. 12A is divided into more first bit zones, an area of each of the first bit zones is smaller than that of the first bit zone shown in FIG. 11A. In other words, a width W of the cross-shape first label zone 114A is smaller than a width of the first label zone 114 shown in FIG. 11A.

FIG. 12B is still another design of the first block 110 of the dot code 10. Referring to FIG. 12B, the first block 110 is also divided into 7×7 first bit zones arranged in an array. However, a cross-shape first label zone 114B is composed of three adjacent rows and three adjacent columns of the bit zones in the center of the first block 110. Namely, a minimum width W' of the cross-shape first label zone 114B of the present embodiment is 3 times compared with the width W of the first bit zone. Therefore, the invention does not limit the minimum width of the label zone as long as the minimum width of the label zone is an integer multiple of the width of the bit zone.

Moreover, it should be noticed that the more the number of the bit zones divided in each block is, the smaller the area of each bit zone is, and therefore setting positions and areas of the bit dots are different, and the user can design the divided number of the bit zones and the minimum with of the label zone with consideration of the bit dot. Moreover, the block and the label zone in the label part 200 may have different designs with that of the data part 100. For example, in a dot code 10, each block and the label zone thereof in the data part 100 may have a design of FIG. 12A, and in the same dot code 10, the block and the label zone thereof in the label part 200 may have the design of FIG. 12B.

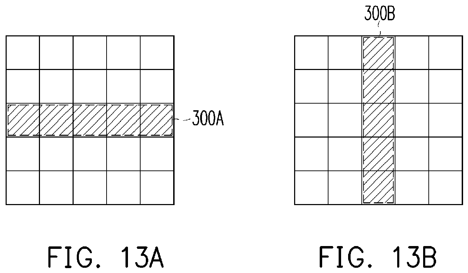

Regarding the dot code 10 in the aforementioned embodiment, regardless of the first block or the second block, the shapes of the label zones are all the crisscross located at the center of the blocks, though the invention is not limited thereto. Referring to FIG. 13A and FIG. 13B, FIG. 13A is another design of the first or the second block of the dot code 10. FIG. 13B is still another design of the first or the second block of the dot code 10. The position of the label zone is not limited to be at the center of the block.

Referring to FIG. 13A, the block can be the first block constructing the data information of the dot code 10, and can also be the second block constructing the label information of the dot code 10. The block is composed of a plurality of bit zones arranged in an array of 5×5, where a label zone 300A has a "-" shape, which includes 5 adjacent bit zones at the center of the block. If the block belongs to the data information, the bit dot of the block has to be set in a zone outside the label zone 300A. Comparatively, if the block belongs to the label information, the bit dot of the block has to be set in a zone inside the label zone 300A.

Referring to FIG. 13B, similar to FIG. 13A, a difference there between is that a label zone 300B of the block of FIG. 13B has a "|" shape. Similarly, if the block belongs to the data information, the bit dot of the block has to be set in a zone outside the label zone 300B. Comparatively, if the block belongs to the label information, the bit dot of the block has to be set in a zone inside the label zone 300B.

The dot codes 10 and the blocks thereof in the aforementioned embodiments are only examples, which are not used to limit the invention, and the arranging method of the blocks forming the label information and the arranging method of the blocks forming the data information are not limited to symmetric squares, which can be arranged in a block array of (A×B), where A and B are positive integers greater than 1. Moreover, the arranging method of the blocks forming the label information is not limited to be the L-shape, which can be one of the rows and one of the columns of the blocks in the dot code 10.

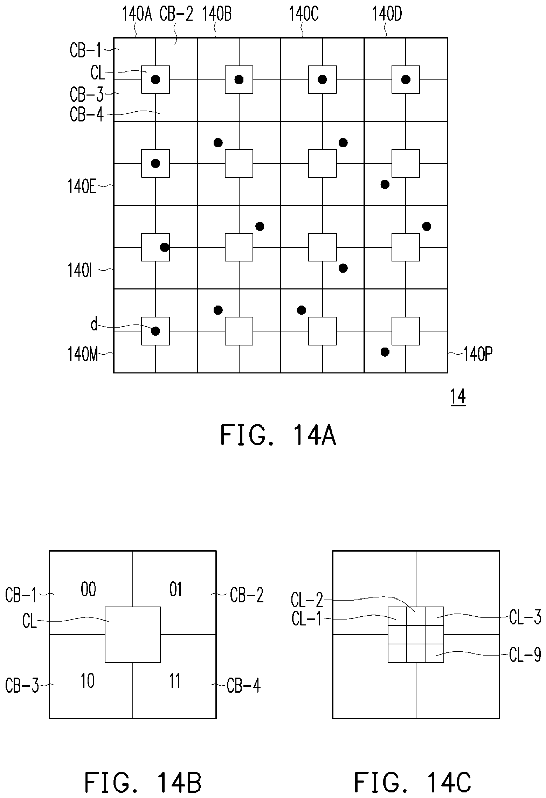

According to another aspect, FIG. 14A is a schematic diagram of a dot code according to a variation embodiment of the invention. FIG. 14B is an enlarged schematic diagram of a virtual block of FIG. 14A. Referring to FIG. 14A and FIG. 14B, the dot code 14 includes a plurality of virtual blocks 140A-140P and a plurality of bit dots d. The virtual blocks 140A-140P form a matrix of 4×4. Each of the virtual blocks 140A-140P is divided into a central label part and four corner bit zones. In the present embodiment, dividing and arranging methods of the central label part and the four corner bit zones in each of the virtual blocks 140A-140P are all the same, though the invention is not limited thereto.

Taking the virtual block 140A of FIG. 14A as an example, the virtual block 140A is divided into a central label part CL and four corner bit zones CB-1∼CB-4. According to FIG. 14A, it is known that the corner bit zones CB-1∼CB-4 encircles the central label part CL, and the central label parts CL in the dot code 14 are not adjacent to each other.

The corner bit zones CB-1∼CB-4 respectively represent a candidate binary code, as that shown in FIG. 14B, the corner bit zone CB-1 represents a candidate binary code 00, the corner bit zone CB-2 represents a candidate binary code 01, the corner bit zone CB-3 represents a candidate binary code 00, the corner bit zone CB-4 represents a candidate binary code 11. The sequence and combination of the candidate binary codes are not limited as that described above.

Referring to FIG. 14A, regarding each of the virtual blocks 140A-140P, the bit dot d can be set in one of the four corner bit zones or set in the central label part. For example, the bit dot d of the virtual block 140A is set in the central label part CL, and the bit dot d of the virtual block 140P is set in the corner bit zone CB-3, and referring to FIG. 14B, it is known that the candidate binary code corresponding to the corner bit zone CB-3 is 10, so that the binary code represented by the virtual block 140P is 10.

It should be noticed that the central label part of the virtual block located at a predetermined position is used to construct a label of a fixed pattern, and such label can serve as a basis of the dot code to determine a predetermined sequence of the binary codes represented by the virtual blocks. For example, the bit dots d of the virtual blocks 140A, 140B, 140C, 140D, 140E, 140I and 140M are all located in the central label part CL, and the above arrangement pattern of the bit dots d in the central label parts CL of the virtual blocks can determine a predetermined sequence of the binary codes represented by the other virtual blocks in the dot code 14, and the binary codes are as follows:

| 140F | 140G | 140H | 140J | 140K | 140L | 140N | 1400 | 140P |
|---|---|---|---|---|---|---|---|---|
| 00 | 01 | 10 | 01 | 11 | 01 | 00 | 00 | 10 |

The code 000110011101000010 constructed by above arranging sequence of the virtual blocks is only an exemplary embodiment of the invention, and different arranging sequences may construct different codes, and the predetermined sequence can be set according to an actual requirement.

Moreover, referring to FIG. 14C, FIG. 14C is a variation of the virtual block of FIG. 14B. As shown in FIG. 14C, the central label part of the virtual block is further divided into a plurality of label zones CL-1∼CL-9, so that the bit dot d set in the central label part can be set in one of the label zones CL-1∼CL-9. The label zones CL-2, CL-4, CL-5, CL-6 and CL-8 are arranged in a crisscross, and the bit dot d can be set in one of the label zones CL-2, CL-4, CL-5, CL-6 and CL-8. Therefore, by further dividing the central label part into a plurality of label zones in collaboration with different setting positions of the bit dot, more labels of complicated patterns can be designed.

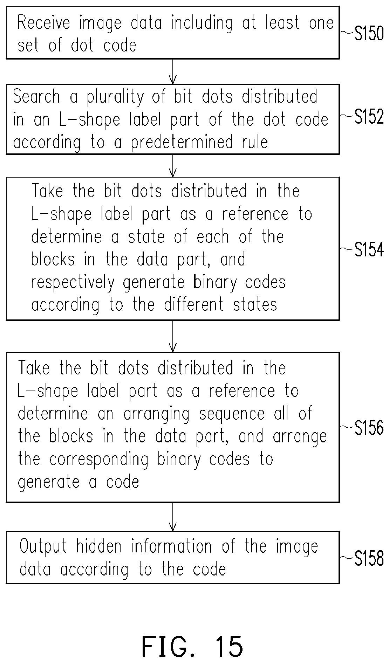

Regarding the aforementioned dot codes arranged in rectangle, the invention also provides a corresponding chip decoding method to decode the dot code. FIG. 15 is a flowchart illustrating a chip decoding method according to an embodiment of the invention.

Referring to FIG. 15, in step S150, image data including at least one set of dot code is received. For example, the image data is, for example, the pattern formed by arranging a plurality of the dot codes 10 of FIG. 4, and the image data can also be the dot code 14 shown in FIG. 14A.

Then, in step S152, a plurality of bit dots distributed in an L-shape label part of the dot code are searched according to a predetermined rule. Taking FIG. 5 as an example, the label part 200 in the dot code 10 has an L-shape distribution. Taking FIG. 14A as an example, the virtual blocks 140A, 140B, 140C, 140D, 140E, 140I and 140M with the bit dot setting in the central label part CL have the L-shape distribution.

In step S154, the bit dots distributed in the L-shape label part are taken as a reference to determine a state of each of the blocks in the data part, and respectively generate binary codes according to the different states. In an embodiment, it is determined whether each block has the bit dot, and the block has a first state when the block has the bit dot, while the block has a second state when the block does not have the bit dot. The binary code of 0 is generated according to the first state, and the binary code of 1 is generated according to the second state; or the binary code of 1 is generated according to the first state, and the binary code of 0 is generated according to the second state. In the aforementioned embodiment, the binary code is generated only by determining whether each of the blocks in the data part has the bit dot. In another embodiment, besides determining the existence of the bit dot, a setting position of the bit dot is further determined to commonly determine the state represented by the block, and different binary codes are correspondingly generated according to different states as that shown in FIG. 11B and FIG. 14B, which are not repeated.

In step S156, the bit dots distributed in the L-shape label part are taken as a reference to determine an arranging sequence all of the blocks in the data part, and arrange the corresponding binary codes to generate a code. Finally, in step S158, Hidden information of the image data is output according to the code. The user can store all of the codes that can be generated by the dot codes and the corresponding instructions in a database in advance, and then the user can directly query one or a plurality of instructions corresponding to the code from the database according to the code generated by the dot code, and the instruction is executed to output the hidden information. The hidden information is, for example, audio information, image information or multimedia information combined with the audio and video information output by an electronic device. In this way, according to the design of the dot code, the image data on the surface of the object such as book paper, etc. may carry more extra information.

In summary, the spirit of the invention is met as long as the block is composed of a plurality of bit zones, where a part of the bit zones form the label zone, the bit dot in the block belonging to the label information is set in the label zone, and the bit dot in the block belonging to the data information is set outside the label zone.

## Claims

1. A data input/output method using a dot code (10), comprising:
forming at least one dot code (10) corresponding to indicator data on a surface of an object, wherein the dot code (10) comprises a data part (100) and a label part (200), and the label part (200) and the data part (100) are adjacent to each other,
the data input/output method being **characterized in that** a region occupied by the data part (100) is divided into a plurality of first blocks (110), each of the first blocks is divided into a plurality of first bit zones (112a∼112y) arranged in an array of (M×N), and M and N are integers greater than or equal to 3, wherein a crisscross part of the first bit zones (112a∼112y) of each of the first blocks (110) forms a first crisscross zone, and a minimum width of the first crisscross zone is an integer multiple of a width of the first bit zone, each of the first blocks (110) respectively has a first bit dot, and each of the first bit dots is set in one of the first bit zones (112a∼112y) outside the first crisscross zone,
wherein a region occupied by the label part (200) is divided into a plurality of second blocks (210), each of the second blocks (210) is divided into a plurality of second bit zones (212a∼212i) arranged in an array of (P×Q), and P and Q are integers greater than or equal to 3, wherein a crisscross part of the second bit zones (212a∼212i) of each of the second blocks (210) forms a second crisscross zone, and a minimum width of the second crisscross zone is an integer multiple of a width of the second bit zone, each of the second blocks (210) respectively has a second bit dot, and each of the second bit dots is set in one of the second bit zones (212a∼212i) within the second crisscross zone; and
optically reading the surface of the object to obtain the indicator data corresponding to the dot code (10).

2. The data input/output method using the dot code (10) as claimed in claim 1, wherein in each of the first blocks (110), the first crisscross zone divides the first block into a first, a second, a third and a fourth data zones, wherein the first, the second, the third and the fourth data zones are respectively composed of a same number of the first bit zones (112a∼112y), and in a same first block, the first, the second, the third and the fourth data zones are not adjacent to each other.

3. The data input/output method using the dot code (10) as claimed in claim 2, wherein each of the first bit dot is set in one of the first, the second, the third and the fourth data zones of each of the first blocks (110), and each of the first bit dots is set in one of the first bit zones (112a∼112y) of the selected data zone to represent a value in the indicator data.

4. The data input/output method using the dot code (10) as claimed in claim 1, wherein the second blocks (210) are distributed in an L-shape, the label part (200) is adjacent to two neighboring boundaries of the data part (100), and each of the second label zones in each of the second blocks (210) is composed of at least one row of the second bit zones (212a∼212i) and at least one column of the second bit zones (212a∼212i).

5. The data input/output method using the dot code (10) as claimed in claim 4, wherein each of the second bit dots in the second block of the same row is set at a cross part of the corresponding second crisscross zone, and each of the second bit dots in the second block of the same column deviates from the cross part of the corresponding second label zone.

6. The data input/output method using the dot code (10) as claimed in claim 4. wherein each of the second bit dots in the second block of the same row deviates from a cross part of the corresponding second crisscross zone along a first direction, and each of the second bit dots in the second block of the same column deviates from the cross part of the corresponding second crisscross zone along a second direction, and the first direction is substantially perpendicular to the second direction, wherein the first direction is parallel to a row direction, and the second direction is parallel to a column direction.

7. The data input/output method using the dot code (10) as claimed in claim 1, wherein the first block and the second block have a same size, and an arranging method of the first crisscross zone in the first block is the same to an arranging method of the crisscross label zone in the second block.

8. A dot code (10), comprising:
at least one dot code (10) corresponding to indicator data on a surface of an object, wherein the dot code (10) comprises a data part (100) and a label part (200), and the label part (200) and the data part (100) are adjacent to each other,
the dot code (10) being **characterized in that** a region occupied by the data part (100) is divided into a plurality of first blocks (110), each of the first blocks is divided into a plurality of first bit zones (112a∼112y) arranged in an array of (MxN), and M and N are integers greater than or equal to 3, wherein a crisscross part of the first bit zones (112a∼112y) of each of the first blocks (110) forms a first crisscross zone, and a minimum width of the first crisscross zone is an integer multiple of a width of the first bit zone, each of the first blocks (110) respectively has a first bit dot, and each of the first bit dots is set in one of the first bit zones (112a∼112y) outside the first crisscross zone,
wherein a region occupied by the label part (200) is divided into a plurality of second blocks (210), each of the second blocks (210) is divided into a plurality of second bit zones (212a∼212i) arranged in an array of (P×Q), and P and Q are integers greater than or equal to 3, wherein a crisscross part of the second bit zones (212a∼212i) of each of the second blocks (210) forms a second crisscross zone, and a minimum width of the second crisscross zone is an integer multiple of a width of the second bit zone, each of the second blocks (210) respectively has a second bit dot, and each of the second bit dots is set in one of the second bit zones (212a∼212i) within the second crisscross zone.

## Patentansprüche

1. Dateneingabe/Ausgabeverfahren unter Verwendung eines Punktcodes (10), umfassend:
Bilden wenigstens eines Punktcodes (10) entsprechend zu Kennzeichnungsdaten auf einer Oberfläche eines Objekts, wobei der Punktcode (10) einen Datenteil (100) und einen Label-Teil (200) umfasst und der Label-Teil (200) und der Datenteil (100) benachbart zueinander sind,
wobei das Dateneingabe/Ausgabeverfahren **dadurch gekennzeichnet ist, dass** eine Region, die durch den Datenteil (100) eingenommen wird, in eine Vielzahl erster Blöcke (110) unterteilt ist, wobei jeder der ersten Blöcke in eine Vielzahl von ersten Bit-Zonen (112a-112y) unterteilt ist, die in einer Anordnung von (MxN) angeordnet sind, wobei M und N ganze Zahlen sind, die größer oder gleich 3 sind, wobei ein überkreuzter Teil der ersten Bit-Zonen (112a-112y) jedes der ersten Blöcke (110) eine erste überkreuzte Zone bildet und eine Minimalbreite der ersten überkreuzten Zone ein ganzzahliges Vielfaches einer Breite der ersten Bit-Zone ist, wobei jeder der ersten Blöcke (110) jeweils einen ersten Bit-Punkt aufweist und jeder der ersten Bit-Punkte in einer der ersten Bit-Zonen (112a-112y) außerhalb der ersten überkreuzten Zone gesetzt ist,
wobei eine Region, die durch den Label-Teil (200) eingenommen wird, in eine Vielzahl von zweiten Blöcken (210) unterteilt ist, wobei jeder der zweiten Blöcke (210) in eine Vielzahl von zweiten Bit-Zonen (212a-212i) unterteilt ist, die in einer Anordnung von (PxQ) angeordnet sind, wobei P und Q ganze Zahlen sind, die größer oder gleich 3 sind, wobei ein überkreuzter Teil der zweiten Bit-Zonen (212a-212i) jedes der zweiten Blöcke (210) eine zweite überkreuzte Zone bildet und eine Minimalbreite der zweiten überkreuzten Zone ein ganzzahliges Vielfaches einer Breite der zweiten Bit-Zone ist, wobei jeder der zweiten Blöcke (210) jeweils einen zweiten Bit-Punkt aufweist und jeder der zweiten Bit-Punkte in einer der zweiten Bit-Zonen (212a-212i) innerhalb der zweiten überkreuzten Zone gesetzt ist; und
optisches Lesen der Oberfläche des Objekts, um die Kennzeichnungsdaten entsprechend dem Punktcode (10) zu erhalten.

2. Dateneingabe/Ausgabeverfahren unter Verwendung eines Punktcodes (10) gemäß Anspruch 1, wobei, in jedem der ersten Blöcke (110), die erste überkreuzte Zone den ersten Block in eine erste, eine zweite, eine dritte und eine vierte Datenzone unterteilt, wobei die erste, die zweite, die dritte und die vierte Datenzone jeweils aus einer gleichen Anzahl an ersten Bit-Zonen (112a-112y) zusammengesetzt sind und, in einem gleichen ersten Block, die erste, die zweite, die dritte und die vierte Datenzone nicht benachbart zueinander liegen.

3. Dateneingabe/Ausgabeverfahren unter Verwendung eines Punktcodes (10) gemäß Anspruch 2, wobei jeder der ersten Bit-Punkte in einer der ersten, der zweiten, der dritten und der vierten Datenzone jedes der ersten Blöcke (110) gesetzt ist und jeder der ersten Bit-Punkte in einer der ersten Bit-Zonen (112a-112y) der ausgewählten Datenzone gesetzt ist, um einen Wert in den Kennzeichnungsdaten zu repräsentieren.

4. Dateneingabe/Ausgabeverfahren unter Verwendung eines Punktcodes (10) gemäß Anspruch 1, wobei die zweiten Blöcke (210) in einer L-Form verteilt sind, wobei der Label-Teil (200) benachbart zu zwei angrenzenden Rändern des Datenteils (100) ist, und wobei jede der zweiten Label-Zonen in jedem der zweiten Blöcke (210) aus wenigstens einer Reihe der zweiten Bit-Zonen (212a-212i) und wenigstens einer Spalte der zweiten Bit-Zonen (212a-212i) zusammengesetzt ist.

5. Dateneingabe/Ausgabeverfahren unter Verwendung eines Punktcodes (10) gemäß Anspruch 4, wobei jeder der zweiten Bit-Punkte in dem zweiten Block der gleichen Reihe an einem Kreuzungsteil der entsprechenden zweiten überkreuzten Zone gesetzt ist und jeder der zweiten Bit-Punkte in dem zweiten Block der gleichen Spalte von dem Kreuzungsteil der entsprechenden zweiten Label-Zone abweicht.

6. Dateneingabe/Ausgabeverfahren unter Verwendung eines Punktcodes (10) gemäß Anspruch 4, wobei jeder der zweiten Bit-Punkte in dem zweiten Block der gleichen Reihe von dem Kreuzungsteil der entsprechenden zweiten überkreuzten Zone entlang einer ersten Richtung abweicht, und wobei jeder der zweiten Bit-Punkte in dem zweiten Block der gleichen Spalte von dem Kreuzungsteil der entsprechenden zweiten überkreuzten Zone entlang einer zweiten Richtung abweicht, und wobei die erste Richtung im Wesentlichen senkrecht zur zweiten Richtung ist, wobei die erste Richtung parallel zur einer Reihenrichtung ist und die zweite Richtung parallel zur einer Spaltenrichtung ist.

7. Dateneingabe/Ausgabeverfahren unter Verwendung eines Punktcodes (10) gemäß Anspruch 1, wobei der erste Block und der zweite Block eine gleiche Größe aufweisen und wobei ein Anordnungsverfahren der ersten überkreuzten Zone in dem ersten Block das gleiche ist wie das Anordnungsverfahren der überkreuzten Label-Zone in dem zweiten Block.

8. Punktcode (10), umfassend:
wenigstens einen Punktcode (10), entsprechend zu Kennzeichnungsdaten auf einer Oberfläche eines Objekts, wobei der Punktcode (10) einen Datenteil (100) und einen Label-Teil (200) umfasst und der Label-Teil (200) und der Datenteil (100) benachbart zueinander sind,
wobei der Punktcode (10) **dadurch gekennzeichnet ist, dass** eine Region, die durch den Datenteil (100) eingenommen wird, in eine Vielzahl erster Blöcke (110) unterteilt ist, wobei jeder der ersten Blöcke in eine Vielzahl von ersten Bit-Zonen (112a-112y) unterteilt ist, die in einer Anordnung von (MxN) angeordnet sind, wobei M und N ganze Zahlen sind, die größer oder gleich 3 sind, wobei ein überkreuzter Teil der ersten Bit-Zonen (112a-112y) jedes der ersten Blöcke (110) eine erste überkreuzte Zone bildet und eine Minimalbreite der ersten überkreuzten Zone ein ganzzahliges Vielfaches einer Breite der ersten Bit-Zone ist, wobei jeder der ersten Blöcke (110) jeweils einen ersten Bit-Punkt aufweist und jeder der ersten Bit-Punkte in einer der ersten Bit-Zonen (112a-112y) außerhalb der ersten überkreuzten Zone gesetzt ist,
wobei eine Region, die durch den Label-Teil (200) eingenommen wird, in eine Vielzahl von zweiten Blöcken (210) unterteilt ist, wobei jeder der zweiten Blöcke (210) in eine Vielzahl von zweiten Bit-Zonen (212a-212i) unterteilt ist, die in einer Anordnung von (PxQ) angeordnet sind, wobei P und Q ganze Zahlen sind, die größer oder gleich 3 sind, wobei ein überkreuzter Teil der zweiten Bit-Zonen (212a-212i) jedes der zweiten Blöcke (210) eine zweite überkreuzte Zone bildet und eine Minimalbreite der zweiten überkreuzten Zone ein ganzzahliges Vielfaches einer Breite der zweiten Bit-Zone ist, wobei jeder der zweiten Blöcke (210) jeweils einen zweiten Bit-Punkt aufweist und jeder der zweiten Bit-Punkte in einer der zweiten Bit-Zonen (212a-212i) innerhalb der zweiten überkreuzten Zone gesetzt ist.

## Revendications

1. Procédé d'entrée/sortie de données utilisant un code à points (10), comprenant de :
former au moins un code à points (10) correspondant aux données d'indicateur sur une surface d'un objet, dans lequel le code à points (10) comprend une partie de données (100) et une partie d'étiquette (200) et la partie d'étiquette (200) et la partie de données (100) sont adjacentes l'une de l'autre,
le procédé d'entrée/sortie de données étant **caractérisé en ce qu'**une région occupée par la partie de données (100) est divisée en une pluralité de premiers blocs (110), chacun des premiers blocs est divisé en une pluralité de premières zones de bits (112a-112y) disposées dans un réseau de (MxN), et M et N sont des entiers supérieurs ou égaux à 3, dans lequel une partie de quadrillage des premières zones de bits (112a-112y) de chacun des premiers blocs (110) forme une première zone de quadrillage, et une largeur minimale de la première zone de quadrillage est un multiple d'entier d'une largeur de la première zone de bit, chacun des premiers blocs (110) a respectivement un premier point de bit, et chacun des premiers points de bits est réglé dans une des premières zones de bits (112a-112y) à l'extérieur de la première zone de quadrillage,
dans lequel une région occupée par la partie d'étiquette (200) est divisée en une pluralité de seconds blocs (210), chacun des seconds blocs (210) est divisée en une pluralité de secondes zones de bits (212a-212i) disposées dans un réseau de (P×Q) et P et Q sont des entiers supérieurs ou égaux à 3, dans lequel une partie de quadrillage des secondes zones de bits (212a-212i) de chacun des secondes blocs (210) forme une seconde zone de quadrillage, et une largeur minimale de la seconde zone de quadrillage est en multiple d'entier d'une largeur de la seconde zone de bits, bchacun des seconds blocs (210) a respectivement un second point de bit, et chacun des seconds points de bits est réglé dans une des secondes zones de bits (212a-212i) à l'intérieur de la seconde zone de quadrillage ; et
lire optiquement la surface de l'objet pour obtenir les données d'indicateur correspondant au code de point (10).

2. Procédé d'entrée/sortie de données utilisant un code à points (10) selon la revendication 1, dans lequel dans chacun des premiers blocs (110), la première zone de quadrillage divise le premier bloc en une première, seconde, troisième et quatrième zone de données, dans lequel la première, seconde, troisième et quatrième zone de données sont respectivement composées d'un même nombre de premières zones de bits (112a-112y), et dans une même bloc de données, la première, seconde, troisième et quatrième zone de données ne sont pas adjacentes l'une de l'autre.

3. Procédé d'entrée/sortie de données utilisant le code à points (10) selon la revendication 2, dans lequel chacun du premier point de bit est réglé dans la première, seconde, troisième et quatrième zone de données de chacun des premiers blocs (110) et chacun des premiers points de bits est réglé dans une des premières zones de bits (112a-112y) de la zone de données sélectionnée pour représenter une valeur dans les données d'indicateur.

4. Procédé d'entrée/sortie de données utilisant le code à points (10) selon la revendication 1, dans lequel les seconds blocs (210) sont distribués en forme de L, la partie d'étiquette (200) est adjacente aux deux limites voisines de la partie de données (100), et chacune des secondes zones d'étiquettes dans chacun des seconds blocs (210) est composée d'au moins une rangée de secondes zones de bits (212a-212i) et au moins une colonne des secondes zones de bits (212a-212i).

5. Procédé d'entrée/sortie de données utilisant le code à points (10) selon la revendication 4, dans lequel chacun des seconds points de bits dans le second bloc de la même rangée est réglé au niveau d'une partie de croisement de la seconde zone de quadrillage correspondante, et chacun des seconds points de bits dans le second bloc de la même colonne dévie de la partie de croisement de la seconde zone d'étiquette correspondante.

6. Procédé d'entrée/sortie de données utilisant le code à points (10) selon la revendication 4, dans lequel chacun des seconds points de bits dans le second bloc de la même rangée dévie d'une partie de croisement de la seconde zone de quadrillage correspondante le long d'une première direction, et chacun des seconds points de bits dans le second bloc de la même colonne dévie de la partie de croisement de la seconde zone de quadrillage correspondante le long d'une seconde direction, et la première direction est substantiellement perpendiculaire à la seconde direction, dans lequel la première direction est parallèle à une direction de rangée et la seconde direction est parallèle à une direction de colonne.

7. Dispositif d'entrée/sortie de données utilisant le code à points (10) selon la revendication 1, dans lequel le premier bloc et le second bloc ont une même taille et un procédé de disposition de la première zone de quadrillage dans le premier bloc est le même que qu'un procédé de disposition de la zone d'étiquette de quadrillage dans le second bloc.

8. Code à points (10), comprenant :
au moins un code à points (10) correspondant aux données d'indicateur sur une surface d'un objet, dans lequel le code à points (10) comprend une partie de données (100) et une partie d'étiquette (200) et la partie d'étiquette (200) et la partie de données (100) sont adjacentes l'une de l'autre,
le code à points (10) étant **caractérisé en ce qu'**une région occupée par la partie de données (100) est divisée en une pluralité de premiers blocs (110), chacun des premiers blocs est divisé en une pluralité de premières zones de bits (112a-112y) disposées dans un réseau de (MxN), et M et N sont des entiers supérieurs ou égaux à 3, dans lequel une partie de quadrillage des premières zones de bits (112a-112y) de chacun des premiers blocs (110) forme une première zone de quadrillage, et une largeur minimale de la première zone de quadrillage est un multiple d'entier d'une largeur de la première zone de bit, chacun des premiers blocs (110) a respectivement un premier point de bit, et chacun des premiers points de bits est réglé dans une des premières zones de bits (112a-112y) à l'extérieur de la première zone de quadrillage,
dans lequel une région occupée par la partie d'étiquette (200) est divisée en une pluralité de seconds blocs (210), chacun des seconds blocs (210) est divisée en une pluralité de secondes zones de bits (212a-212i) disposées dans un réseau de (PxQ) et P et Q sont des entiers supérieurs ou égaux à 3, dans lequel une partie de quadrillage des secondes zones de bits (212a-212i) de chacun des secondes blocs (210) forme une seconde zone de quadrillage, et une largeur minimale de la seconde zone de quadrillage est en multiple d'entier d'une largeur de la seconde zone de bits, chacun des seconds blocs (210) a respectivement un second point de bit, et chacun des seconds points de bits est réglé dans une des secondes zones de bits (212a-212i) à l'intérieur de la seconde zone de quadrillage.
